# EUROPEAN PATENT SPECIFICATION

(11) **EP 2 788 912 B1**
(45) Date of publication and mention of the grant of the patent: **08.05.2019**
(21) Application number: 12855031.6
(22) Date of filing: 07.12.2012
(51) Int. Cl.: G06F 21/00, G06F 15/16, G06F 11/30, G06F 9/06, G06F 21/52, G06F 21/54, G06F 21/55, G06F 21/56, H04L 29/06

(54) **PREDICTIVE HEAP OVERFLOW PROTECTION**
PRÄDIKTIVER HEAP-ÜBERLAUFSCHUTZ
PROTECTION PRÉDICTIVE DE DÉBORDEMENT DE PILE

(30) Priority: 09.12.2011 US 201113315928
(43) Date of publication of application: 15.10.2014
(73) Proprietor: McAfee, LLC, Santa Clara, CA 95054 (US)
(72) Inventor: ALME, Christoph, 33100 Paderborn (DE); FINKE, Stefan, 33100 Paderborn (DE)
(74) Representative: Goddar, Heinz J.
(86) International application number: PCT/US2012/068398
(87) International publication number: WO 2013/086289

(56) References cited:
- KR-A- 20110 119 918
- US-A1- 2009 300 764
- US-A1- 2010 037 317
- US-B1- 7 562 391
- US-B1- 7 984 304
- KONRAD RIECK ET AL: "Cujo", PROCEEDINGS OF THE 26TH ANNUAL COMPUTER SECURITY APPLICATIONS CONFERENCE ON, ACSAC '10, 6 December 2010 (2010-12-06), page 31, XP055121846, New York, New York, USA DOI: 10.1145/1920261.1920267 ISBN: 978-1-45-030133-6
- Manuel Egele ET AL: "Mitigating Drive-By Download Attacks: Challenges and Open Problems" In: "Policies and Research in Identity Management", 1 January 2009 (2009-01-01), Springer Berlin Heidelberg, Berlin, Heidelberg, XP055206706, ISSN: 1868-4238 ISBN: 978-3-64-237282-7 vol. 309, pages 52-62, DOI: 10.1007/978-3-642-05437-2_5, * page 8 - page 10 *

## Description

### TECHNICAL FIELD OF THE INVENTION

The present invention relates generally to computer security and malware protection and, more particularly, to predictive heap overflow protection.

### BACKGROUND

Malware infections on computers and other electronic devices are very intrusive and hard to detect and repair. Anti-malware solutions may require matching a signature of malicious code or files against evaluated software to determine that the software is harmful to a computing system. Malware may disguise itself through the use of polymorphic executables wherein malware changes itself to avoid detection by anti-malware solutions. In such case, anti-malware solutions may fail to detect new or morphed malware in a zero-day attack. Malware may include, but is not limited to, spyware, rootkits, password stealers, spam, sources of phishing attacks, sources of denial-of-service-attacks, viruses, loggers, Trojans, adware, or any other digital content that produces unwanted activity.

KONRAD RIECK ET AL: "Cujo" in PROCEEDINGS OF THE 26TH ANNUAL COMPUTER SECURITY APPLICATIONS CONFERENCE ON, ACSAC '10, 6 December 2010 (2010-12-06), page 31, XP055121846 discloses a system for dynamically detecting heap-spraying attacks based on excessive memory allocation.

Manuel Egele ET AL: "Mitigating Drive-By Download Attacks: Challenges and Open Problems", in: "Policies and Research in Identity Management", 1 January 2009 (2009-01-01), Springer Berlin Heidelberg, XP055206706 disclosed to detect heap-spaying by detecting assignment of identical strings to array indices.

### SUMMARY

The invention is defined by a method according to claim 1, and an article of manufacture according to claim 9 and a system according to claim 10. Further embodiments are defined in the dependent claims.

### BRIEF DESCRIPTION OF THE DRAWINGS

For a more complete understanding of the present invention and its features and advantages, reference is now made to the following description, taken in conjunction with the accompanying drawings, in which:
FIGURE 1 is an illustration of an example system for predictive heap overflow protection;
FIGURE 2 is a further illustration of example configuration and execution of an anti-malware detector and other components of a system for predictive heap overflow protection;
FIGURE 3 is a further illustration of example operation of a system for predictive heap overflow protection;
FIGURE 4 is an illustration of an example embodiment of a method for predictive heap overflow protection;
FIGURES 5a and 5b are an illustration of an example method for determining whether memory allocations match to previously created memory allocations and thus indicate overflow-based malware; and
FIGURE 6 is an illustration of an example embodiment of a method for determining whether memory allocations do not match previously created memory allocations and thus indicate that overflow-based malware is not present.

### DETAILED DESCRIPTION

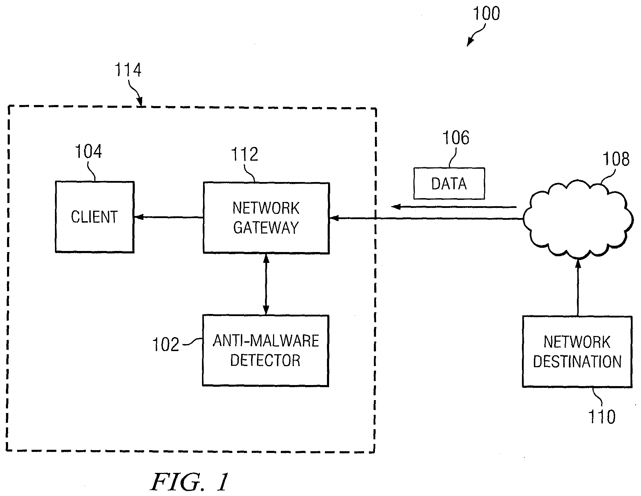

FIGURE 1 is an illustration of an example system 100 for predictive heap overflow protection. System 100 may be configured to determine whether an entity in the form of an application or data for an application is malware. Such data may be malware configured to exploit overflow weaknesses in a system or vulnerable application. In one embodiment, system 100 may be configured to detect malware attempting to exploit vulnerabilities such as heap overflow weaknesses.

Heap overflow weaknesses in a system may include the vulnerability of a system to buffer overflows wherein data is written to a buffer but data is written to memory adjacent to the buffer. Exploitations of overflow weaknesses may include, for example, malware using stack-based or heap-based exploitation techniques. Heap-based exploitation techniques may include corrupting memory allocated within a memory heap of a target system with malicious code. Such memory allocations may be made at run-time. System 100 may be configured to determine such attempts to exploit weaknesses in an application.

System 100 may be configured to protect a client 104 from malware. In one embodiment, system 100 may be configured to protect client 104 from heap-based overflow-based malware attacks. Client 104 may include a computer, server, laptop, tablet, smartphone, or any other suitable electronic device prone to malware attacks.

To protect client 104 from malware attacks, potentially dangerous data such as data 106 may be tested by anti-malware detector 102. Data 106 may include an application or information for an application to load or execute. For example, data 106 may include a word processing file, e-mail, e-mail attachment, spreadsheet file, image file, .PDF file, .html pages, JavaScript or other script, code to be executed by an application on client 104, or Flash® file. Data 106 may include portions of such entities or multiple instances of such entities. In some cases, data 106 may be known to be malicious or known to be safe. However, typical anti-malware scanning of data 106 to make such a determination may be expensive in terms of processing resources and impractical given a large amount of data to be loaded on to client 104. In other cases, the malware status of data 106 may be unknown. Thus, typical anti-malware scanning of data 106 may not yield information of whether data 106 is safe or not. In addition, the scanning may be expensive. Data 106 may contain a so-called "zero-day" malware attack, wherein its malicious contents have not yet been identified by, for example, signature-based anti-malware mechanisms.

In one embodiment, data 106 may be downloaded over network 108 from network destination 110. Such a download may be made, for example, in response to a request by an application on client 104. The request may be made on behalf of a legitimate application or in a disguised manner by malware on client 104. In another embodiment, data 106 may already be present on client 104.

Network destination 110 may include, for example, a website, server, or network entity accessible by client 104. Network destination 110 may be configured to spoof legitimate data, pages, or other content that client 104 may attempt to access, but network destination 118 instead may cause client 104 to download malicious applications, data, files, code, or other content-in the form of data 106. For example, a web browser application on client 104 may access network destination 110 for a seemingly legitimate website, but scripts downloaded as part of data 106 configured to be executed on client 104 may include malware.

Network 108 may include any suitable network, series of networks, or portions thereof for communication between electronic device 104, monitor 102, and reputation server 106. Such networks may include but are not limited to: the Internet, an intranet, wide-area-networks, local-area-networks, back-haul-networks, peer-to-peer-networks, or any combination thereof.

Anti-malware detector 102 may be configured to determine potentially dangerous elements in data 106. In one embodiment, anti-malware detector 102 may be configured to determine whether data 106 includes information configured to attack client 102 or other devices using overflow exploitations such as heap-based overflow malware.

Anti-malware detector 102 may be implemented using any suitable mechanism, such as a script, executable, shared library, application, process, server, or virtual machine. In one embodiment, anti-malware detector 102 may reside on client 104 and be configured to analyze data 106 received by client 104. In another embodiment, anti-malware detector 102 may reside separately from client 104. In such an embodiment, anti-malware detector may be configured to analyze data 106 before it is received by client 104. Thus, anti-malware detector may be configured to protect client 104 from ever receiving data 106 if it is determined that data 106 is malicious.

In order to protect client 104 from ever receiving data 106 determined to be malicious, system 100 may be configured to intercept data 106 before it reaches client 104. In one embodiment, anti-malware detector 102 may be configured to intercept data 106. In another embodiment, system 100 may include a network gateway 112 configured to intercept data 106. In such an embodiment, network gateway 112 may be communicatively coupled to or include anti-malware detector 102. Network gateway 112 may be implemented using any suitable mechanism, such as an executable, application, process, server, or network device. Upon receipt of data 106, network gateway 112 may be configured to send data 106 to anti-malware detector 102 to determine whether data 106 is malicious. If data 106 is malicious, network gateway 112 or anti-malware detector 102 may be configured to block data 106 from client 104. Anti-malware detector 102 and/or network gateway 112 may be configured to intercept and analyze similar downloads to other electronic devices similarly situated to client 104. Consequently, network gateway 112 and/or anti-malware detector 102 may be configured to protect an entire network 114 from malicious data 106. Network 114 may include, for example, a local-area-network, wide-area-network, or portions thereof whose network access to an outside network 108 is protected by network gateway 112 and/or anti-malware detector.

Anti-malware detector 102 may be configured to determine whether data 106 comprises an attempted malware attack on client 104. In one embodiment, anti-malware detector 102 may be configured to determine whether data 106 includes an application configured to conduct a malware attack on client 104. In another embodiment, anti-malware detector 102 may be configured to determine whether data 106 includes an overflow-based malware attack.

Anti-malware detector 102 may be configured to analyze whether data 106 comprises an attempted malware attack in any suitable manner. In one embodiment, anti-malware detector 102 may be configured to emulate the execution of data 106 or an application using data 106. Such an embodiment may be used in conjunction with, for example, a virtual machine configured to emulate the execution of an application using data 106 or execution of data 106 itself. The virtual machine may be resident, for example, on a server separate from client 104 or upon client 104 itself. In another embodiment, anti-malware detector 102 may hook the memory of an electronic device executing data 106 or an application using data 106. In yet another embodiment, anti-malware detector 102 may be configured to execute data 106 or an application using data 106 in a sandbox to protect system resources of client 104.

Anti-malware detector 102 may be configured to analyze the execution of data 106 or an application using data 106 by analyzing the memory allocations generated in such an execution. If a presently identified memory allocation closely resembles a previous memory allocation, then the execution may indicate that data 106 is malicious. Such a resemblance may be evidence that similar data is being repeatedly written to memory, which may be an indication of an overflow-based malware attack. Anti-malware detector 102 may be configured to consult additional anti-malware detector entities if insufficient evidence exists to determine whether data 106 is safe or malicious.

If anti-malware detector 102 determines that data 106 comprises an attempted malware attack, anti-malware detector 102 may be configured to block the attempted download of data 106. If data 106 has already been loaded onto client 104 or another portion of system 100, anti-malware detector 102 may be configured to clean data 106 through any suitable mechanism or in any suitable manner. For example, data 106 may be removed, deleted, or quarantined. Anti-malware detector 102 may be configured to notify a user of client 102 of the blocked attempt. Further, anti-malware detector 102 may be configured to send data 106 or information related to data 106 to an anti-malware server for further analysis, reporting, or spreading of knowledge of data 106 to other anti-malware entities and installations. In addition, anti-malware detector 102 may be configured to classify network destination 110 as unsafe and to report such a determination to an anti-malware server. If anti-malware detector 102 determines that data 106 does not comprise an attempted malware attack, anti-malware detector 102 may be configured to allow the attempted download of data 106.

In operation, anti-malware detector 102 may be operating to protect client 104 and/or other entities in network 114 from malware attacks. In one embodiment, anti-malware detector 102 may be executing on client 104. In another embodiment, anti-malware detector 102 may be operating separately from client 104. In such an embodiment, anti-malware detector may be operating on, for example, a server on network 114. Network gateway 112 may be operating on network 114.

In one embodiment, data 106 may be present on client 104. In another embodiment, data 106 may be downloaded from network destination 110 over network 108. Data 106 may be downloaded with client 104 as a target. Data 106 may be intercepted by network gateway 112 and/or anti-malware detector 102. Network gateway 112 and/or anti-malware detector 102 may analyze data 106 to determine the type of its contents. If data 106 includes an application to be executed on client 104, data 106 may be processed by anti-malware detector 102 to determine whether it includes malware configured to conduct overflow-based attacks. Anti-malware detector 102 may determine one or more applications that may use data 106. If data 106 includes information for an application that is prone to overflow-based attacks, data 106 may be processed by anti-malware detector to determine whether data 106 includes malware configured to conduct overflow-based attacks.

Anti-malware detector 102 may analyze data 106 or an application using data 106 to determine whether data 106 comprises malware. In one embodiment, anti-malware detector 102 may analyze the execution of data 106 to determine whether data 106 includes overflow-based malware. Anti-malware detector 102 may monitor and analyze the memory allocations associated with executing data 106 or an application using data 106. Anti-malware detector 102 may determine whether presently made memory allocations match or are related to previous memory allocations.

In one embodiment, to monitor and analyze such execution anti-malware detector 102 may hook memory functions of client 104 such as a memory profiler. In such an embodiment, anti-malware detector 102 may be executing on client 104 or communicatively coupled to client 104. Data 106 may already be present on client 104. An application on client 104 may be executing using data 106.

In another embodiment, anti-malware detector 102 may utilize a virtual machine to emulate the execution and memory allocation of data 106 or an application using data 106. The application may have been selected by anti-malware detector 102 or network gateway 112 after analyzing data 106.

If anti-malware detector 102 determines that a presently made memory allocation matches or is related to previous memory allocations, anti-malware detector may determine that data 106 comprises an overflow-based malware attack. Anti-malware detector 102 or network gateway 112 may block the further download of data 106 to components of network 114 such as client 104. Anti-malware detector 102 may clean data 106 from client 104 or from other portions of network 114. Further, anti-malware detector 102 may send information regarding client 104 to other anti-malware servers for further analysis, reporting, or distribution.

If anti-malware detector 102 determines that no memory allocations intercepted match or are related to previous memory allocations, anti-malware detector may determine that data 106 does not comprise an overflow-based malware attack. In one embodiment, data 106 may be passed to other anti-malware entities for further analysis. In another embodiment, data 106 may be allowed to be downloaded and executed on client 104.

If anti-malware detector 102 cannot determine definitively that any memory allocations intercepted match or are related to previous memory allocations, anti-malware detector may pass data 106 to other anti-malware entities for further analysis. Such other anti-malware entities may include, for example, typical anti-malware scanning software or anti-heap-overflow malware software. Execution of such entities may be expensive in terms of system resources. However, given a preliminary determination by anti-malware detector that data 106 may or may not malicious, the expense of such execution may be justified. Further, analysis by anti-malware detector 102 may preclude the necessity of running such entities in many cases-such as where memory allocations closely resemble previous memory allocations. Consequently, execution of typical anti-malware techniques in cases where anti-malware detector 102 cannot make a definitive determination may lead to an overall increase in efficiency of malware detection.

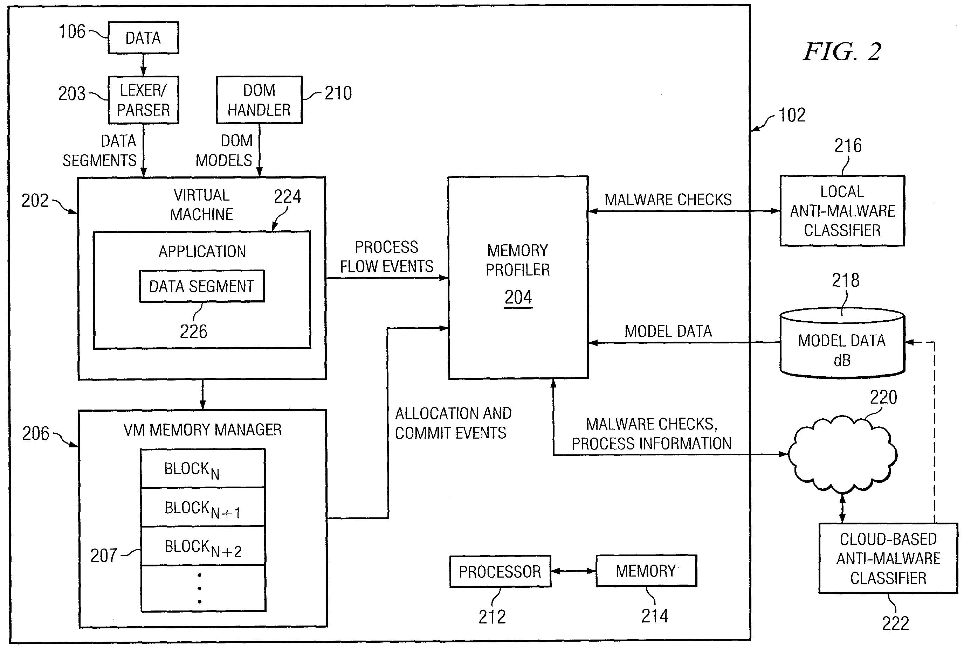

FIGURE 2 is a further illustration of example configuration and execution of anti-malware detector 102 and other components of system 100. In one embodiment, anti-malware detector 102 may be implemented by using a virtual machine framework. Anti-malware detector 102 may include a virtual machine 202 communicatively coupled to a memory profiler 204 and a virtual machine memory manager 206.

Virtual machine 202 may be configured to emulate the operation of an application 224 as it would execute on client 104. Further, virtual machine 202 may be configured to emulate the operation of any suitable application, including an application contained within the data 106 of FIGURE 1 or an application identified by anti-malware detector 102 as using data 106. After executing portions of data 106, virtual machine 202 may be configured to send process flow events to memory profiler 204. Such process flow events may include, for example, the termination of a looping operation. Virtual machine 202 may be configured to send such a termination event because such an event may correspond to completion of an attempted memory allocation or write as part of an overflow-based malware attack.

Anti-malware detector 102 may include a lexer/parser 204 configured to parse and interpret data 106. Lexer/parser 204 may be configured to determine the structure of data 106 and to send data segments to virtual machine 224. Virtual machine 202 may execute application 224 with a corresponding data segment 226.

Anti-malware detector 102 may include or be communicatively coupled to a document object model ("DOM") handler 210. DOM handler 210 may include one or more DOMs configured to provide information of how to execute application 224. DOM handler 210 may include a DOM corresponding to every kind of application or data type that anti-malware detector 102 is configured to emulate or analyze. For example, given a web browser script in data 106, DOM handler 210 may be configured to how to manipulate a web browser application emulated in application 224 to cause execution of or select choices in the script.

Virtual machine 202 may be configured to execute application 224 through the end of an execution loop. Execution of application 224 may require the emulation or execution of commands to allocate memory. Virtual machine 202 may be configured to send such memory allocation instructions to virtual machine memory manager 206. Further, virtual machine 202 may be configured to send process control events such as those indicating a termination of an execution loop to memory profiler 204.

Virtual machine memory manager 206 may be configured to make such memory allocations 207. Memory allocations 207 may represent or emulate memory allocations that would be made by the execution of application 224 in client 104. Memory allocations 207 may be created as memory blocks. Memory allocations 207 may include program data associated with application 224 using data segment 226. The contents of memory allocations 207 may indicate that an overflow-based malware attack has been made. Virtual machine memory manager 206 may be configured to send memory allocation 207 to memory profiler 204 for analysis.

Memory profiler 204 may be configured to compare memory allocations against each other to determine whether data 106 includes an overflow-based malware attack. Memory profiler 204 may be configured to make such determinations by determining whether, for example, the memory allocations match each other or the memory allocations are made within quick succession. Further, memory profiler 204 may be configured to make such determinations at any suitable time. For example, memory profiler 204 may be configured to analyze a newly created memory allocation against previously created memory allocations. In another example, memory profiler 204 may be configured to analyze a memory allocation against previously created memory allocations upon receipt of a loop termination event from virtual machine 202.

Memory profiler 204 may be configured to use any suitable mechanism or method to compare memory allocations. Model data database 218 may be configured to provide model data to memory profiler 204. Such information may include criteria for memory profiler 204 to make comparisons between memory allocations. For example, model data database 218 may include decision trees or rules regarding comparisons of memory allocations and how such comparisons may be used to make determinations of whether data 106 is malicious, safe, or unknown. Model data database 218 may include model data characterizing memory allocations, for example, indicating malware or indicating safe data. Such indications may be determined by statistical analysis of known malicious data or known safe data. Memory profiler 204, after determining that data 106 is safe or malicious, may provide data 106 and the determination to cloud-based anti-malware classifier 222 or another anti-malware server, which may in turn process such results from other clients and generate updates for model data database 218. Model data database 218 may be configured to indicate to memory profiler 204 a series of such criteria which are to be applied to comparisons of memory allocations and to indicate how to proceed if such criteria are met. The series of criteria may include making multiple kinds of comparisons sequentially. The criteria may contain thresholds of differences between memory allocations.

In one embodiment, memory profiler 204 may be configured to compare a hash, digital signature, or checksum of a given memory allocation against other created memory allocations. Memory profiler 204 may be configured to generate such a hash, digital signature, or checksum of the memory allocations to uniquely identify the memory allocation. A checksum may be used to make such comparisons efficiently. If the hash, signature, or checksum of the memory allocation matches another memory allocation already created, then memory profiler 204 may be configured to determine that the memory allocations match each other. In a further embodiment, memory profiler 204 may be configured to determine that memory allocations with the same hash, signature, or checksum are themselves equal. Such matching or equal memory allocations may be an indication of an attempt to repeatedly write the same malicious code into the memory of client 104 by application 224. Such an attempt to repeatedly write malicious code may indicate that application 224 is attempting an overflow-based malware attack. Consequently, memory profiler 204 may determine that data 106 is malicious.

If the hash, signature, or checksum of a memory allocation does not match any other memory allocations, memory profiler 204 may be configured to take any suitable subsequent action. For example, memory profiler 204 may be configured to determine that the memory allocations do not match and thus data 106 does not constitute overflow-based malware. However, malware in data 106 may have caused a sufficient number of changed bits within each generated memory allocation to avoid checksum detection. Thus the example may fail to detect malware actually present in data 106. Consequently, in another example memory profiler 204 may be configured to perform additional checks on the memory allocation. Such additional checks may include additional comparisons between the memory allocations, as described below, or passing data 106 to other anti-malware entities, as described below.

In another embodiment, memory profiler 204 may be configured to compare the size of a given memory allocation against other created memory allocations. Memory profiler 204 may be configured to determine from model data database 218 a threshold difference of memory allocation size under which two memory allocations may be determined to match. Such matching or equally sized memory allocations may be an indication of an attempt to repeatedly write the same malicious code into the memory of client 104 by application 224. Such an attempt to repeatedly write malicious code may indicate that application 224 is attempting an overflow-based malware attack. Consequently, memory profiler 204 may determine that data 106 is malicious if two or more memory allocations resulting from execution of application 224 match with regards to size.

Memory profiler 204 may be configured to determine from model data database 218 a threshold difference of memory allocation size over which two memory allocations may be determined to not match. Such non-matching memory allocations may be an indication that there is no attempt to repeatedly write the same malicious code into the memory of client 104 by application 224. Consequently, memory profiler 204 may determine that data 106 is safe if the memory allocations resulting from execution of application 224 do not match.

If the difference between two memory allocations is neither below a first threshold indicating a match, nor exceeding a second threshold indicating that the memory allocation is safe regarding malware, memory profiler 204 may be configured to take any suitable subsequent action. For example, memory profiler 204 may be configured to determine that the memory allocations do not match and thus data 106 does not constitute overflow-based malware. However, malware in data 106 may have caused memory allocations to fluctuate in size to avoid size comparison detection. Such behavior may not yet have been accounted for in model data database 218. Consequently, in another example memory profiler 204 may be configured to perform additional checks on the memory allocation. Such additional checks may include additional comparisons between the memory allocations, as described above and below, or passing data 106 to other anti-malware entities, as described below.

In yet another embodiment, memory profiler 204 may be configured to compare the entropy of a given memory allocation against other created memory allocations. The entropy of a given memory allocation may be an indication of the nature of the code contained therein. Any suitable method of determining entropy of code or data may be used. Memory profiler 204 may be configured to determine an entropy comparison standard from model data database 218. For example, model data database 218 may include model data indicating that, for an entropy rating system from (1...9), two memory allocations must have the same entropy value to be considered matching. In another example, model data database 218 may include an entropy difference threshold under which the differences between the entropy of two memory allocations indicate that the memory allocations match. Matching entropy values may be an indication of an attempt to repeatedly write the same malicious code into the memory of client 104 by application 224. Such an attempt to repeatedly write malicious code may indicate that application 224 is attempting an overflow-based malware attack. Consequently, memory profiler 204 may determine that data 106 is malicious if two or more memory allocations resulting from execution of application 224 are match with regards to entropy.

Memory profiler 204 may be configured to determine from model data database 218 a threshold difference of entropy over which two memory allocations may be determined to have substantially different entropy. In one example, using an entropy rating system range of (1 ...9), a difference of greater than or equal to one may be substantially different. Such substantially different memory allocations in terms of entropy may be an indication that the code written in each of the memory allocations is substantially different, and thus there is no attempt to repeatedly write the same malicious code into the memory of client 104 by application 224. Consequently, memory profiler 204 may determine that data 106 is safe if the memory allocations resulting from execution of application 224 are created with substantially different entropy.

If no two memory allocations match each other in terms of entropy, memory profiler 204 may be configured to take any suitable subsequent action. For example, memory profiler 204 may be configured to determine that the memory allocations do not match and thus data 106 does not constitute overflow-based malware. However, malware in data 106 may have caused memory allocations to fluctuate to avoid size comparison detection. Such behavior may not yet have been accounted for in model data database 218. Consequently, in another example, memory profiler 204 may be configured to perform additional checks on the memory allocation. Such additional checks may include additional comparisons between the memory allocations, as described above and below, or passing data 106 to other anti-malware entities, as described below.

In still yet another embodiment, memory profiler 204 may be configured to compare the allocation time of a given memory allocation against other created memory allocations. Memory profiler 204 may be configured to determine from model data database 218 a threshold difference of memory allocation times under which two memory allocations may be determined to have been created within a substantially close amount of time. The close difference in allocation times may indicate that application 224 attempted to repeatedly make memory allocations. Such repeated memory allocations may be an indication of an attempt to repeatedly write the same malicious code into the memory of client 104 by application 224. Such an attempt to repeatedly write malicious code may indicate that application 224 is attempting an overflow-based malware attack. Consequently, memory profiler 204 may determine that data 106 is malicious if the memory allocations are created within a substantially close amount of time.

Memory profiler 204 may be configured to determine from model data database 218 a threshold difference of memory allocation time over which two memory allocations may be determined to be created sufficiently apart. Such separately created memory allocations may be an indication that there is no attempt to repeatedly write the same malicious code into the memory of client 104 by application 224. Consequently, memory profiler 204 may determine that data 106 is safe if the memory allocations resulting from execution of application 224 are created at substantially different times.

If the difference in time between two memory allocations is neither substantially close nor apart, memory profiler 204 may be configured to take any suitable subsequent action. For example, memory profiler 204 may be configured to determine that the memory allocations are not substantially close and thus data 106 does not constitute overflow-based malware. However, malware in data 106 may have caused memory allocations to fluctuate in regards to time of allocation to avoid size comparison detection. Such behavior may not yet have been accounted for in model data database 218. Consequently, in another example memory profiler 204 may be configured to perform additional checks on the memory allocation. Such additional checks may include additional comparisons between the memory allocations, as described above, or passing data 106 to other anti-malware entities, as described below.

When memory profiler 204 is unable to confirm that data 106 constitutes overflow-based malware, but is also unable to confirm that data 106 is safe, memory profiler 204 may be configured to determine that the malware status of data 106 is unknown.

Using a single suitable comparison method, memory profiler 204 may determine that comparisons between memory allocations do not show that the memory allocations match or are sufficiently related to determine that data 106 is malicious. However, as described above such a failure to detect malicious actions may be the result of malware disguising itself. Consequently, a combination of the above embodiments may be used. In one example, the checksum, size, entropy, and time techniques may be used sequentially in any suitable order. In another example, once any of the checksum, size, entropy, or time techniques determines that two memory allocations match, data 106 may be determined to be malicious. In a further example, data 106 may be sent to additional anti-malware entities for further verification if any memory allocations are determined to match using any technique. In yet another example, a specific combination of determinations or a number of determinations that two memory allocations match may indicate that data 106 is malicious.

If memory profiler 204 is unable to determine based on any suitable technique that any two memory allocations match or fail to match, then data 106 may be categorized as unknown and sent to additional anti-malware entities for further verification. If memory profiler 204 determines that, based on any suitable combination of techniques, that there is no indication that any two memory allocations match, then data 106 may be categorized as safe.

For any combination of techniques of comparison of memory allocations, memory profiler 204 may be configured to determine a percentage confidence level that data 106 is malicious. For example, if two memory allocations share a checksum, memory profiler 204 may be configured to determine with 95% certainty that data 106 is malicious. In another example, if no two such memory allocations share a checksum but two memory allocations are substantially the same size, memory profiler 204 may be configured to determine with 50% certainty that data 106 is malicious. The percentage certainty assigned by a given technique may be variable, depending upon the determined differences in memory allocations. For example, if two memory allocations are identical in size, memory profiler 204 may be configured to determine with 85% certainty that data 106 is malicious. However, if the two memory allocations are 10% different in size, memory profiler 204 may be configured to determine with 40% certainty that data 106 is malicious. The techniques may be combined in determining a percentage confidence level. For example, if the entropy of two memory allocations are the same and they were created within a short amount of time from each other, memory profiler 204 may be configured to determine with 95% certainty that data 106 is malicious. Determination of the confidence percentage level factors may be based on model data database 218. Statistical analysis of known malicious code may show a strong correlation to one or more of the comparisons performed by memory profiler 204. Consequently, observed behavior of application 224 using data 106 corresponding to such known behavior may be quantified by memory profiler 204. A percentage confidence level determined by memory profiler 204 may be used by other anti-malware entities which are sent analysis regarding data 106.

Memory profiler 204 may be configured to access one or more other anti-malware entities to determine the malware status of data 106. In one embodiment, memory profiler 204 may be configured to make such access when the analysis of data 106 has concluded that two memory allocations match. Such access may provide an additional check against a false-positive that data 106 is malicious. In another embodiment, memory profiler 204 may be configured to make such access when the analysis of data 106 has been unable to conclude whether any two memory allocations are match or fail to match. Such access may provide a second line of defense against malware that may not match expected behavior of malware but cannot be conclusively determined to be safe.

System 100 may include a local anti-malware classifier 216 communicatively coupled to anti-malware detector 102. Local anti-malware classifier 216 may reside, for example, on a server or local area network with anti-malware detector 102. Local anti-malware classifier 216 may include one or more applications configured to test data 106. Anti-malware detector 102 may be configured to send data 106 and associated information and analysis to local anti-malware classifier 216. Local anti-malware classifier 216 may be configured to apply techniques that are more resource intensive than anti-malware detector 102. For example, local anti-malware classifier 216 may be configured to determine whether data 106 matches signature-based whitelists-indicating that data 106 is safe-or blacklists-indicating the data 106 is malware. In another example, local anti-malware classifier 216 may be configured analyze data 106 specifically for shell-code and produce a confidence level of whether data 106 is malicious. In such an example, local anti-malware classifier 216 may be configured to consider the previous analysis accomplished by anti-malware detector 102. If a default confidence level required to determine data 106 to be malicious is 95% for such shellcode analysis, determination by anti-malware detector 102 that data 106 is malicious or unknown may cause local anti-malware classifier 216 to lower the confidence level that is necessary to determine that data 106 is malicious. For example, the confidence level may be lowered to 70%.

System 100 may include a cloud-based anti-malware classifier 222 communicatively coupled to anti-malware detector 102. Cloud-based anti-malware classifier 222 may reside, for example, on a server on network 220. Network 220 may include any suitable network, series of networks, or portions thereof for communication between anti-malware detector 102 and cloud-based anti-malware classifier 222. Such networks may include but are not limited to: the Internet, an intranet, wide-area-networks, local-area-networks, back-haul-networks, peer-to-peer-networks, or any combination thereof. Anti-malware detector 102 may be configured to send context information regarding the execution of data 106 by application 224, such as a feature vector representing elements of the execution of data 106 or a fingerprint or digital signature, to cloud-based anti-malware classifier 222. Cloud-based anti-malware classifier 222 may be configured to determine whether the data 106 has been reported by other anti-malware detectors and any associated analysis. Cloud-based anti-malware classifier 222 may be configured to return an indication to anti-malware detector 102 of whether data 106 is known to be malicious or safe. If data 106 is reported by anti-malware detector 102 to be malicious or safe, then cloud-based anti-malware classifier 222 may be configured to incorporate information about data 106 in statistical models of known safe or malicious data. Such statistical models may be provided to model data database 218.

Anti-malware detector 102 may include a memory 214 coupled to a processor 212. Memory profiler 204, virtual machine 202, and virtual memory manager 206 may be implemented in any suitable process, application, file, executable, or other suitable entity. Memory profiler 204, virtual machine 202, and virtual memory manager 206 may contain instructions for performing the functions described herein, and the instructions may be stored in memory 214 for execution by processor 212.

Processor 212 may comprise, for example a microprocessor, microcontroller, digital signal processor (DSP), application specific integrated circuit (ASIC), or any other digital or analog circuitry configured to interpret and/or execute program instructions and/or process data. In some embodiments, processor 212 may interpret and/or execute program instructions and/or process data stored in memory 214. Memory 214 may be configured in part or whole as application memory, system memory, or both. Memory 214 may include any system, device, or apparatus configured to hold and/or house one or more memory modules. Each memory module may include any system, device or apparatus configured to retain program instructions and/or data for a period of time (e.g., computer-readable media).

In operation, memory profiler 204, virtual machine 202, and virtual memory manager 206 may be executing on anti-malware detector 102. Anti-malware detector 102 may receive data 106 to be analyzed to determine whether it contains overflow-based malware. Virtual machine 202 may launch application 224 based on data 106 that was received by anti-malware detector 102.

Lexer/parser 203 may divide data 106 into data segments 226 and send such segments to virtual machine 202. Virtual machine 202 may access one or more DOMs from DOM handler 210 to determine how to execute application 204. Application 224 may execute or emulate data segment 226. Upon completion of various process flow events such as termination of an execution loop, virtual machine 202 may notify memory profiler 204. As required, virtual machine 202 may access virtual machine memory manager 206 to create memory allocations 207. New memory allocations may be passed by virtual machine memory manager 206 to memory profiler 204.

Memory profiler 204, upon receipt of a process flow event and/or a new memory allocation, may compare the new memory allocation against previously created memory allocations. Memory profiler 204 may continue such analysis until application 224 has been completely emulated or executed based on data 106 or until memory profiler 204 determines that data 106 includes malware.

Memory profiler 204 may compare a new memory allocation against all previously created memory allocations to determine whether the new memory allocation matches a previous memory allocation to determine that data 106 includes an overflow-based malware attack. Any suitable technique may be used to determine whether the new memory allocation matches a precious memory allocation. For example, characteristics of each memory allocation may be compared. In a further example, the differences between the characteristics of each memory allocation may be compared against one or more thresholds. Memory profiler 204 may combine one or more comparison techniques. Memory profiler 204 may access model data database 218 to determine decision trees, comparisons to be conducted, thresholds, or other information useful to compare the new memory allocation against previously created memory.

Memory profiler 204 may compare the checksum, signature, or hash of a new memory allocation against the previously created memory allocations. If the new memory allocation matches a previous memory allocation, memory profiler 204 may determine that the new memory allocation matches the previous memory allocation. Memory profiler 204 may determine, at least preliminarily, that data 106 includes overflow-based malware. In one embodiment, memory profiler 204 may determine that data 106 includes malware with, for example, a 95% confidence level. If the new memory allocation does not match a previous memory allocation, memory profiler 204 may conduct additional comparisons.

Memory profiler 204 may compare the size of a new memory allocation against the previously created memory allocations. If the new memory allocation has the same size as a previously created memory allocation, or is within a designated threshold difference in size, memory profiler 204 may determine that the new memory allocation matches the previous memory allocation and that data 106 includes malware if the memory allocation matches the previous memory allocation. If the difference in size between the new memory allocation and previous memory allocations exceeds a given threshold, memory profiler 204 may determine that the new memory allocation does not match the previous memory allocation. Memory profiler 204 may determine that data 106 does not include malware if the difference in size between the memory allocation and the previous memory allocation exceeds a second, larger threshold. A determination by memory profiler 204 that the new memory allocation match or fail to match with regards to size may be used in conjunction with other comparisons. In one embodiment, memory profiler 204 may quantify the difference between the new memory allocation and the previous memory allocation with regards to size and translate the difference into a confidence level that data 106 includes malware. Such a confidence level may be used in conjunction with other comparisons, such as those described below.

Memory profiler 204 may compare the entropy of a new memory allocation against the previously created memory allocations. If the new memory allocation has the same entropy as a previously created memory allocation, or is within a designated threshold difference in entropy, memory profiler 204 may determine that the new memory allocation matches the previous memory allocation. Memory profiler 204 may determine that data 106 includes malware if the memory allocation matches the previous memory allocation. If the difference in entropy between the new memory allocation and previous memory allocations exceeds a given threshold, memory profiler 204 may determine that the new memory allocation matches the previous memory allocation. Memory profiler 204 may determine that data 106 does not include malware if the memory allocation does not match the previous memory allocation with regards to entropy. A determination by memory profiler 204 that the new memory allocation matches or fails to match previous memory allocations with regards to entropy may be used in conjunction with other comparisons. In one embodiment, memory profiler 204 may quantify the differences between the new memory allocation and the previous memory allocation with regards to entropy and translate the differences into a confidence level that data 106 includes malware. Such a confidence level may be used in conjunction with other comparisons.

Memory profiler 204 may compare the time at which allocation was made of a new memory allocation against the arrival time of previously created memory allocations. If the new memory allocation has an allocation time within a designated threshold of the allocation time of a previous memory allocation, memory profiler 204 may determine that the new memory allocation is sufficiently close in time and matches previous memory allocation. Memory profiler 204 may determine that data 106 includes malware if the memory allocation is sufficiently close in time to the previous memory allocation. If the difference in allocation time between the new memory allocation and previous memory allocations exceeds a given threshold, memory profiler 204 may determine that the new memory allocation fails to match the previous memory allocation. Memory profiler 204 may determine that data 106 does not include malware if the memory allocation fails to match the previous memory allocation with regards to allocation time. A determination by memory profiler 204 that the new memory allocation matches or fails to match the previous memory allocations may be used in conjunction with other comparisons. In one embodiment, memory profiler 204 may quantify the differences between the new memory allocation and the previous memory allocation with regards to allocation time and translate the differences into a confidence level that data 106 includes malware. Such a confidence level may be used in conjunction with other comparisons.

Determination that a given comparison yielded a malicious result or an unknown result may cause memory profiler 204 to conduct additional comparisons or to access additional anti-malware resources. In one embodiment, determination that a given comparison yielded safe result may cause memory profiler 204 to conduct additional comparisons. In another embodiment, such a determination may cause memory profiler 204 to determine that code 106 is safe. In yet a further embodiment, only upon all comparison methods yielding a safe determination will memory profiler 204 determine that code 106 is safe.

Virtual machine 202, memory profiler 204, and virtual machine memory manager 206 may continue processing data 106 until application 224 has finished executing. Upon detection of a potentially malicious set of data 106 or a set of data 106 whose malware status is unknown, memory profiler 204 may use local anti-malware classifier 216 or cloud-based anti-malware classifier 222 to conduct further analysis on data 106. Memory profiler 204 may send signatures, feature vectors, or other information regarding data 106 to such entities. Memory profiler 204 may receive an indication of such entities about whether data 106 can be determined to include overflow-based malware.

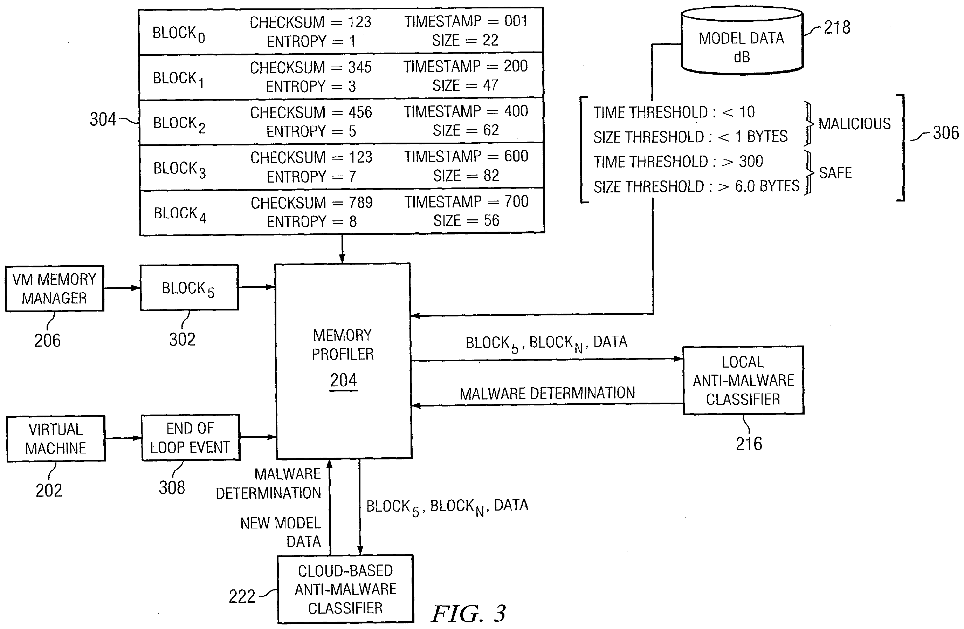

FIGURE 3 is a further illustration of example operation of system 100. Previous memory allocations 304 may include previously allocated blocks Block₀ - Block₅ and associated information:

| | | | |
|---|---|---|---|
| Block₀:Checksum=123; | Entropy =1; | Timestamp=001; | Size=22 |
| Block₁: Checksum=345; | Entropy =3; | Timestamp=200; | Size=47 |
| Block₂: Checksum=456; | Entropy =5; | Timestamp=400; | Size=62 |
| Block₃: Checksum=123; | Entropy =7; | Timestamp=600; | Size=82 |
| Block₄: Checksum=789; | Entropy =8; | Timestamp=800; | Size=56 |

The checksum and entropy of each block may be determined through any suitable manner as described above. The timestamp of each block may be determined by the time at which the block was allocated and may be measured in, for example, milliseconds. The size of each block may be measured in any suitable manner, such as in bytes. Memory profiler 204 may have access to previous allocations 304 by, for example, storing information as it is received by virtual machine memory manager 206 or by accessing virtual machine memory manager 206.

Virtual machine 202 may generate an end of loop event 308 and send it to memory profiler 204. Virtual machine memory manager 206 may allocate a new block 302 called Block₅ and send information regarding it to memory profiler 204.

Memory profiler 204 may access model data database 218 to obtain model data such as thresholds 306 by which to compare Block₅ with previous allocations 304. For example, thresholds 306 may indicate that a time difference of less than ten milliseconds and a size difference of less than one byte may indicate that data 106 is likely to include overflow-based malware. In another example, thresholds 306 may indicate that a time difference of greater than 300 milliseconds and a size difference of greater than sixty bytes may indicate that data 106 is not likely to include overflow-based malware.

Memory profiler 204 may compare the information of Block₅ against previous allocations 304 to determine whether Block₅ is matches any such allocations to determine that data 106 is indicative of overflow-based malware, fails to match such allocations, or that a match or failure to match cannot be confidently determined.

For example, Block₅ may have a checksum of "123." Memory profiler 204 may determine that the checksum of Block₅ matches the checksums of both Block₀ and Block₃ from the previous allocations 304. Memory profiler 204 may determine that Block₅ matches to Block₀ and Block₃ and determine that such a match is an indication that data 106 contains overflow-based malware. A determination that Block₅ matches more than one of previous allocations 304 may provide further evidence that data 105 contains overflow-based malware. Memory profiler 204 may send data 106, Block₅, Block₀, and Block₃ to cloud-based anti-malware classifier 222 or local anti-malware classifier for further reporting and analysis. Memory profiler 204 may notify anti-malware detector 102 that data 106 is likely malicious and should be cleaned, blocked, or removed. Memory profiler 204 may establish a confidence level of, for example, 95% that data 106 includes overflow-based malware. In one embodiment, additional comparisons of Block₅ and previous allocations 304 may be unnecessary.

In another example, Block₅ may have a size of forty-six bytes and an entropy value of three. Memory profiler 204 may determine that the entropy of Block₅ matches the entropy of Block₁ from the previous allocations 304. Memory profiler 204 may determine that Block₅ matches Block₁ and determine that such a match is an indication that data 106 contains overflow-based malware. Memory profiler 204 may establish a confidence level of, for example, 40% that data 106 includes overflow-based malware. In one embodiment, a matching entropy value between Block₅ and Block₁ may be insufficient to determine that Block₅ and Block₁ match. In such an embodiment, additional comparisons may be made.

Thus, memory profiler may determine that the size difference between Block₅ and Block₁ is one byte, which is less than the threshold identified in thresholds 306. Memory profiler 204 may determine that Block₅ matches Block₁ and determine that such a match is an indication that data 106 contains overflow-based malware. The combination of comparisons using size and entropy may cause memory profiler 204 to memory profiler 204 to determine that data 106 includes overflow-based malware. Memory profiler 204 may establish a confidence level of, for example, 95% that data 106 includes overflow-based malware. Memory profiler 204 may send data 106, Blocks, and Block₁ to cloud-based anti-malware classifier 222 or local anti-malware classifier for further reporting and analysis. Memory profiler 204 may notify anti-malware detector 102 that data 106 is likely malicious and should be cleaned, blocked, or removed.

In yet another example, Block₅ may have a time stamp of "405." Memory profiler 204 may determine that the time stamp of Block₅ is within the threshold of less than ten milliseconds (defined by thresholds 306) of Block₂. Memory profiler 204 may determine that Block₅ matches Block₂ and determine that such a match is an indication that data 106 contains overflow-based malware. Memory profiler 204 may send data 106, Blocks, and Block₂ to cloud-based anti-malware classifier 222 or local anti-malware classifier for further reporting and analysis. Memory profiler 204 may notify anti-malware detector 102 that data 106 is likely malicious and should be cleaned, blocked, or removed. Memory profiler 204 may establish a confidence level of, for example, 80% that data 106 includes overflow-based malware.

However, if Block₅ also has a size of eighty-two bytes, memory profiler 204 may determine that the size difference between Block₅ and Block₂ is not within the threshold of less than one byte as defined by thresholds 306. Consequently, memory profiler 204 may be unable to determine that Block₅ matches Block₂, on the basis of size comparison. Memory profiler 204 may lower a confidence level that data 106 includes overflow-based malware for Block₅. Memory profiler 204 may submit Blocks, Block₂, and data 106 to cloud-based anti-malware classifier 222 and local anti-malware classifier 216 for additional indications that data 106 is malicious. Such information may be submitted with the confidence levels or malware information determined by memory profiler 204 and may be taken into account by cloud-based anti-malware classifier 222 and local anti-malware classifier 216 in making malware determinations.

In still yet another example, Block₅ may have a time stamp of "750" and a size of one hundred twenty bytes. Memory profiler 204 may determine that Block₅ matches Block₄ in terms of size difference (sixty-four bytes). According to thresholds 306, a size difference of greater than sixty bytes may indicate that the memory allocations match. However, memory profiler 204 may determine that the time difference between Block₅ and Block₁ (fifty milliseconds) falls within neither the first threshold (less than ten milliseconds) (to determine that the blocks match) nor outside the second threshold (greater than three-hundred milliseconds) (to determine that the blocks do not match). Memory profiler 204 may submit Blocks, Block₄, and data 106 to cloud-based anti-malware classifier 222 and local anti-malware classifier 216 for additional indications that data 106 is malicious or safe. Memory profiler 204 may conduct additional comparisons, such as checksum or entropy comparisons, to further determine the status of Block₅. In one embodiment, memory profiler 204 may disregard a single undetermined status comparison among multiple definitive comparisons.

In an additional example, Block5 may have a time stamp of "1100," a checksum of "555," an entropy value of six, and a size of one-hundred eighty bytes. Memory profiler 204 may determine that Block₅ does not match any checksum or any entropy of the prior allocations 304. Further, memory profiler 204 may determine that the size difference between Block₅ and the prior allocations 304 exceeds the threshold size difference amount (sixty bytes) and would be considered a match as defined by thresholds 306. In addition, memory profiler 204 may determine that the time difference between Block₅ and the prior allocations 304 exceeds the time threshold amount (three hundred milliseconds) and would be a failure to match, as defined by thresholds 306. Memory profiler 204 may conclude that Block₅ is substantially different from any of the prior allocations 304, and consequently data 106 does not include overflow-based malware.

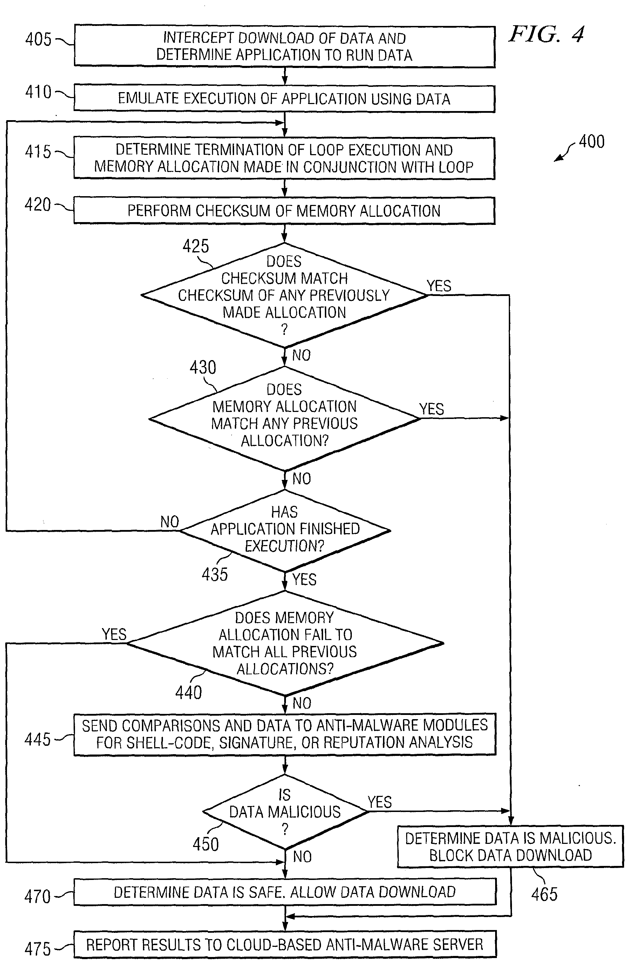

FIGURE 4 is an illustration of an example embodiment of a method 400 for predictive heap overflow protection.

In step 404, a download of data may be intercepted, or data resident on an electronic device may be detected. Such data may be unknown, untrusted, or otherwise have a malware status that is not known to be safe. The data may be downloaded from, for example, an unknown network destination. The data may include an application or information to be used by an application. An application associated with the data may be determined to execute with the data.

In step 410, the application may be executed or emulated using the data. The application may be emulated in, for example, a virtual machine or executed on, for example, an electronic device on which data resides. Execution of loops within the application or attempted memory allocations may be detected by, for example, a virtual machine memory monitor or hooks within memory allocation functions. In step 415, it may be determined that an execution loop has terminated and/or a new memory allocation has been made by the application.

The new memory allocation may be compared against previous memory allocations to determine whether malware is operating to repeatedly write malicious code in an attempt exploit an overflow-based weakness in the application. The new memory allocation may be compared against previous memory allocations in any suitable manner.

In step 420, a checksum, hash, or digital signature of the newly created memory allocation may be determined. In step 425, it may be determined whether the checksum matches the checksum of any previously created memory allocation. If so, then the method 400 may continue to step 465.

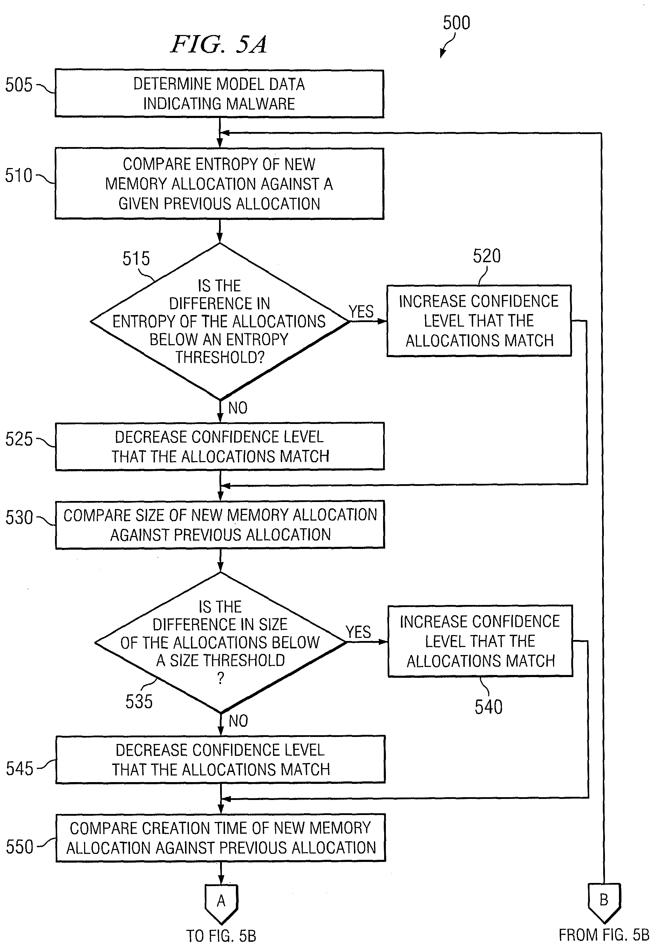

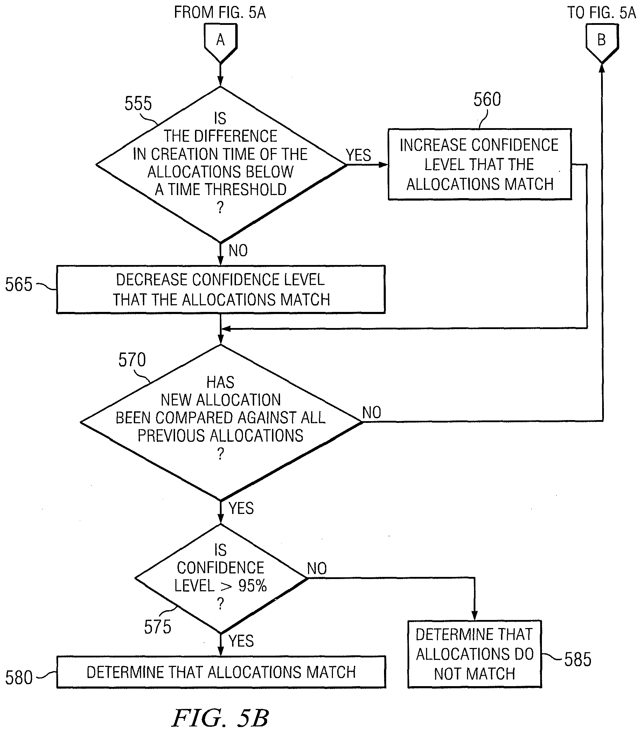

If the checksum of the new memory allocation does not match any previously created memory allocation, then in step 430 it may be determined whether the memory allocation matches or is equal to any previous memory allocation. Any suitable method to compare the memory allocation against previous memory allocations may be used. For example, the size, entropy, and/or allocation time of the allocations may be compared. A threshold difference between the allocations may be used to measure or qualify the differences. In one embodiment, step 430 may be conducted by the steps of method 500 as shown in FIGURES 5a and 5b. If the memory allocation matches or is equal to any previous memory allocation, then method 400 may proceed to step 465.

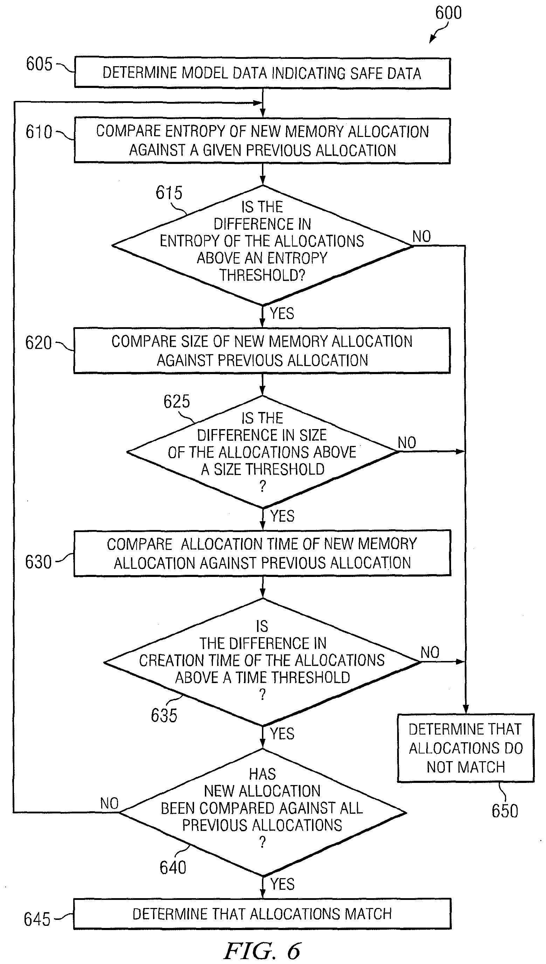

If the memory allocation fails to match any previous memory allocation, then in step 435 it may be determined whether the application has finished execution. If not, then method 400 may return to step 415 to wait for the allocation of a new memory allocation. If the application has finished execution, then in step 440 it may be determined whether the memory allocation fails to match any previous allocations. Although step 440 and step 430 are presented in different steps, they may be conducted in parallel. Another threshold difference between the allocations may be used to measure or qualify the differences between the allocations. In one embodiment, step 440 may be conducted by the steps of method 600 as shown in FIGURE 6. If the memory allocation fails to match all previous memory allocations, then method 400 may proceed to step 470.

If the memory allocation fails to match all previous memory allocations, then it may not be fully determined whether the data is malicious or not based on comparisons of memory allocations generated by used of the data. In step 445, the results of the comparisons and the data may be sent to anti-malware modules configured to conduct, for example, shell-code, signature-based, or reputation analysis. The malware status based on the data itself, in conjunction with, for example, confidence levels determined by analyzing the memory allocation behavior in steps 430 and 440, may thus be determined.

In step 450, if the data is determined to be malicious based on such analysis, then method 400 may proceed to step 465. If the data is determined not to be malicious, then method 400 may proceed to step 470.

In step 465, it may be determined that the data is malicious, based on the analysis of the memory allocation behavior when the data is used. Such data may include overflow-based malware. Any suitable corrective action may be taken. Such data may be blocked from further download, or cleaned or removed from an electronic device or network. In step 475, such a malicious determination may be reported to a cloud-based anti-malware server with the data and results of analysis. Such a malicious determination may be incorporated in characterizations of memory allocation behavior.

In step 470, it may be determined that the data is safe, based on the analysis of the memory allocation behavior when data is sued. The data may be allowed to execute or allowed to download to its target client. In step 475, such a safe determination may be reported to a cloud-based anti-malware server with the data and results of analysis. Such a safe determination may be incorporated in characterizations of memory allocation behavior.

FIGURES 5a and 5b are an illustration of an example method 500 for determining whether memory allocations match previously created memory allocations and thus indicate overflow-based malware.

In step 505, model data indicating malware may be determined. Such model data may be the result of statistical analysis of the memory allocation behavior of data known to be overflow-based malware. The model data may be accessed in, for example, a database, and may have been generated by an anti-malware server or service. The model data may include hierarchies, decision trees, comparisons, and/or thresholds to be applied to characterize memory allocation behavior.

Method 500 may include any suitable combination of comparisons of a newly created memory allocation against previously created memory allocations. In one embodiment, the determination that a given metric indicates that a newly created memory allocation matches a previously created memory allocation may be sufficient to determine that the allocation behavior is indicative of overflow-based malware. In another embodiment, such a determination may require additional comparisons using other metrics. Three such possible comparisons are shown below. Specific combinations of applying the comparisons in a specific order may be determined by statistical analysis of the memory allocation behavior of data known to be overflow-based malware. In yet another embodiment, any such comparison may yield a confidence level that the memory allocation matches a previous memory allocation and thus indicates malware. The confidence levels may also be determined through the described statistical analysis. In addition, the steps of method 600 may be conducted in parallel or intermingled with the comparisons described.

In step 510, entropy of the new memory allocation may be compared against the entropy of a previous allocation. Any suitable measure of entropy may be used. In step 515, if the difference in entropy between the allocations is below an entropy threshold, then in step 520 it may be determined that such a difference is an indication that the allocations match. In one embodiment, such a determination may be used to increase a confidence level that the allocations match. If the difference in entropy between the allocations is not below the entropy threshold, then in step 525 it may be determined that such a difference is not an indication that the allocations match. In one embodiment, such a determination may be used to decrease a confidence level that the allocations match.

In step 530, the size of the new memory allocation may be compared against the size of a previous allocation. In step 535, if the difference in size between the allocations is below a size threshold, then in step 540 it may be determined that such a difference is an indication that the allocations match. In one embodiment, such a determination may be used to increase a confidence level that the allocations match. If the size difference between the allocations is not below the size threshold, then in step 545 it may be determined that such a difference is not an indication that the allocations match. In one embodiment, such a determination may be used to decrease a confidence level that the allocations match.

In step 550, the creation or allocation time of the new memory allocation may be compared against the creation time of a previous allocation. In step 555, if the difference in creation time between the allocations is below a time threshold, then in step 560 it may be determined that such a difference is an indication that the allocations match. In one embodiment, such a determination may be used to increase a confidence level that the allocations match. If the difference in creation time between the allocations is not below the time threshold, then in step 565 it may be determined that such a difference is not an indication that the allocations match. In one embodiment, such a determination may be used to decrease a confidence level that the allocations match.

In step 570, it may be determined whether the new allocation has been compared against all previous allocations. If not, method 500 may return to step 510 to continue comparing the new allocation against another given previous allocation.

If the new allocation has been compared against all previous allocations, in step 575 it may be determined whether the new allocation matches any of the previous allocations. In one embodiment, if the new allocation has been determined by two comparisons to match characteristics of a previous allocation, then in step 580 it may be determined that the new allocation matches the previous allocation. In another embodiment, if the confidence level-that the new allocation is matches the previous allocations-exceeds a threshold such as 95%, then in step 580 it may be determined that the new allocation matches the previous allocation. If not, then in step 585 it may be determined that the new allocation does not match previous allocations.

FIGURE 6 is an illustration of an example embodiment of a method 600 for determining whether memory allocations do not match previously created memory allocations and thus indicate that overflow-based malware is not present.

In step 605, model data indicating safe data may be determined. Such model data may be the result of statistical analysis of the memory allocation behavior of data known to be safe. The model data may be accessed in, for example, a database, and may have been generated by an anti-malware server or service. The model data may include hierarchies, decision trees, comparisons, and/or thresholds to be applied to characterize memory allocation behavior.

Method 600 may include any suitable combination of comparisons of a newly created memory allocation against previously created memory allocations. In one embodiment, the determination that a given metric indicates that a newly created memory allocation does not match a previously created memory allocation may be sufficient to determine that the allocation behavior is indicative of overflow-based malware. In another embodiment, such a determination may require additional comparisons using other metrics. Three such possible comparisons are shown below. Specific combinations of applying the comparisons in a specific order may be determined by statistical analysis of the memory allocation behavior of data known to be overflow-based malware. In yet another embodiment, all such comparisons may be used to determine that a memory allocation does not match any previous memory allocation and thus indicates that the data is safe. The comparisons of method 600 may be conducted in parallel or intermingled with method 500.

In step 610, the entropy of the new memory allocation may be compared against the entropy of a previous allocation. Any suitable measure of entropy may be used. In step 615, if the difference in entropy between the allocations is above an entropy threshold, then the method 600 may proceed to step 620 to continue making comparisons between the allocations. If the difference in entropy does not exceed the entropy threshold, then the method 600 may proceed to step 650.

In step 620, the size of the new memory allocation may be compared against the size of a previous allocation. In step 625, if the difference in size between the allocations above below a size threshold, then the method 600 may proceed to step 630 to continue making comparisons between the allocations. If the size difference between the allocations is not above the size threshold, then the method 600 may proceed to step 650.

In step 630, the creation time of the new memory allocation may be compared against the creation time of a previous allocation. In step 635, if the difference in creation time between the allocations is above a time threshold, then the method 600 may proceed to step 640 to continue making comparisons between the allocations. If the creation time difference between the allocations is not above the time threshold, then the method 600 may proceed to step 650.

In step 640, it may be determined whether the new allocation has been compared against all previously created allocations. If not, them method 600 may return to step 610 to compare the new allocation against another given previous allocation.

If the new allocation has been compared against all previously created allocations, then in step 645 it may be determined that the new allocation does not match any previously created allocation. In one embodiment, the new allocation has been compared against all such allocations and exceeded the threshold differences defined in each comparison check. In another embodiment, the new allocation may be determined to not match a previously created allocation if the differences exceeded the thresholds in at least two of the comparisons.

In step 650, it may be determined that the new allocation fails to match any previously created allocation. The new allocation may not have met at least one difference threshold during a comparison with a previously created allocation. Thus a reasonable chance may exist that the new allocation matches a previously created allocation.

Methods 400, 500 and 600 may be implemented using the system of FIGURES 1-4 or any other system operable to implement methods 400, 500 and 600. As such, the preferred initialization point for methods 400, 500 and 600 and the order of the steps comprising methods 400, 500 and 600 may depend on the implementation chosen. In some embodiments, some steps may be optionally omitted, repeated, or combined. Some steps of methods 400, 500 and 600 may be conducted in parallel. In certain embodiments, methods 400, 500 and 600 may be implemented partially or fully in software embodied in computer-readable media.

For the purposes of this disclosure, computer-readable media may include any instrumentality or aggregation of instrumentalities that may retain data and/or instructions for a period of time. Computer-readable media may include, without limitation, storage media such as a direct access storage device (e.g., a hard disk drive or floppy disk), a sequential access storage device (e.g., a tape disk drive), compact disk, CD-ROM, DVD, random access memory (RAM), read-only memory (ROM), electrically erasable programmable read-only memory (EEPROM), and/or flash memory; as well as communications media such wires, optical fibers, and other electromagnetic and/or optical carriers; and/or any combination of the foregoing.

Although the present disclosure has been described in detail, it should be understood that various changes, substitutions, and alterations can be made hereto without departing from the scope of the disclosure as defined by the appended claims.

## Claims

1. A method for detecting malware, the method being performed by anti-malware detector (102) and the method comprising:
identifying a set of data (106) whose malware status is not known to be safe;
launching (410) an application (224) on an electronic device using the data;
determining (415) that one or more prior memory allocations have been created by the application, wherein the prior memory allocations have been created after the launching on the electronic device and before the creation of a new memory allocation;
determining that the new memory allocation has been created by the application;
comparing the new memory allocation to the one or more prior memory allocations wherein comparing the new memory allocation to the one or more prior memory allocations comprises comparing (530, 535) the size of the new memory allocation to the size of one or more prior memory allocations; and
based on the comparison, determining whether the data includes malware, wherein determining whether the data includes malware comprises determining whether the size of the new memory allocation is within a threshold amount of the size of any of the one or more prior memory allocations, said threshold determined from a database comprising criteria to make comparisons between memory allocations, said criteria including thresholds of difference between memory allocations, wherein the data (106) and the determination result of whether the data (106) includes malware is provided to a cloud-based anti-malware classifier (222) or to an anti-malware server for updating the database (218).

2. The method of Claim 1, wherein:
comparing the new memory allocation to the one or more prior memory allocations further comprises applying a criterion for determining whether the new memory allocation matches one or more of the one or more prior memory allocations; and
determining that the data includes malware based upon the new memory allocation matching one or more of the one or more prior memory allocations.

3. The method of Claim 1, further comprising:
emulating the execution of the application on a virtual machine;
detecting a termination of an execution loop in the execution of the application on the virtual machine, the one or more prior memory allocations made during the execution loop; and
creating the new memory allocation on the virtual machine;
wherein comparing the new memory allocation and the one or more prior memory allocations is conducted after detecting the termination of the execution loop.

4. The method of Claim 1, wherein:
comparing the new memory allocation to the one or more prior memory allocations further comprises comparing a checksum of the new memory allocation to a checksum of one or more of the one or more prior memory allocations; and
determining whether the data includes malware further comprises determining whether the new memory allocation checksum equals the checksum of any of the one or more prior memory allocations.

5. The method of Claim 1, wherein:
comparing the new memory allocation to the one or more prior memory allocations further comprises comparing the creation time of the new memory allocation to the creation time of the one or more prior memory allocations; and
determining whether the data includes malware further comprises determining whether the new memory allocation was created within a threshold creation time of any of the one or more prior memory allocations.

6. The method of Claim 1, wherein:
comparing the new memory allocation to the one or more prior memory allocations further comprises comparing a first entropy value of the new memory allocation to a second entropy value of the one or more prior memory allocations; and
determining whether the data includes malware further comprises determining whether the first entropy value is within a threshold amount of the second entropy value.

7. The method of Claim 1, wherein:
comparing the new memory allocation to the one or more prior memory allocations further comprises two or more of:
comparing a checksum of the new memory allocation to a checksum of one or more of the prior memory allocations;
comparing the creation time of the new memory allocation to the creation time of the one or more prior memory allocations; and
comparing a first entropy value of the new memory allocation to a second entropy value of the one or more prior memory allocations; and
determining whether the data includes malware further comprises determining two or more of:
whether the new memory allocation checksum equals the checksum of any of the one or more prior memory allocations;
whether the new memory allocation was created within a second threshold creation time of any of the one or more prior memory allocations;
whether the first entropy value is within a third threshold amount of the second entropy value.

8. The method of Claim 1, further comprising:
based on the comparison, determining that the malware status of the data is unknown; and
performing anti-malware analysis based on the contents of the data to determine whether the data includes malware.

9. An article of manufacture, comprising:
a non-transitory computer readable medium; and
computer-executable instructions carried on the non-transitory computer readable medium, the instructions readable by a processor, the instructions, when read and
executed, for causing the processor to perform the steps of any of the methods of Claims 1-8.

10. A system for detecting malware, comprising:
a processor coupled to a memory; and
an anti-malware detector executed by the processor, resident within the memory, the anti-malware detector configured to perform the operations of any of the methods of claims 1 to 8.

## Patentansprüche

1. Verfahren zur Detektion von Malware, wobei das Verfahren von einer Anti-Malware-Detektektionseinrichtung (102) ausgeführt wird und das Verfahren umfasst:
Identifizieren einer Gruppe von Daten (106), bei denen nicht bekannt ist, ob der Malware-Status sicher ist;
Starten (410) einer Anwendung (224) auf einem elektronischen Gerät unter Verwendung der Daten;
Bestimmen, dass ein oder mehrere früherer Speicherzuweisungen von der Anwendung erzeugt worden sind, wobei die früheren Speicherzuweisungen nach dem Starten auf dem elektronischen Gerät und vor der Erzeugung einer neuen Speicherzuweisung erzeugt worden sind;
Bestimmen, dass die neue Speicherzuweisung von der Anwendung erzeugt worden ist;
Vergleichen der neuen Speicherzuweisung mit der einen oder den mehreren früheren Speicherzuweisungen, wobei Vergleichen der neuen Speicherzuweisung mit der einen oder den mehreren Speicherzuweisungen Vergleichen der Größe der neuen Speicherzuweisung mit der Größe von einer oder mehreren früheren Speicherzuweisungen umfasst;
basierend auf dem Vergleich bestimmen, ob die Daten Malware enthalten, wobei Bestimmen, ob die Daten Malware enthalten, Bestimmen umfasst, ob die Größe der neuen Speicherzuweisung innerhalb eines Schwellenwerts für die Größe von irgendeiner der einen oder mehreren früheren Speicherzuweisungen liegt, wobei der von einer Datenbasis bestimmte Schwellenwert Kriterien zur Durchführung von Vergleichen zwischen Speicherzuweisungen umfasst, wobei besagte Kriterien Schwellenwerte für eine Differenz zwischen Speicherzuweisungen umfassen, wobei die Daten (106) und das Ergebnis der Ermittlung, ob die Daten (106) Malware enthalten, einer Cloud-basierten Anti-Malware-Klassifizierungseinrichtung (222) oder einem Anti-Malware-Server zum Aktualisieren der Datenbank (218) bereitgestellt werden.

2. Verfahren nach Anspruch 1, wobei:
Vergleichen der neuen Speicherzuweisung mit der einen oder den mehreren früheren Speicherzuweisungen ferner Anwenden eines Kriteriums zur Bestimmung, ob die neue Speicherzuweisung mit einer oder mehreren der einen oder mehreren früheren Speicherzuweisungen übereinstimmt, umfasst; und
Bestimmen, dass die Daten Malware enthalten, basierend auf der Übereinstimmung der neuen Speicherzuweisung mit einer oder mehreren der einen oder mehreren früheren Speicherzuweisungen.

3. Verfahren nach Anspruch 1, ferner umfassend:
Emulieren der Ausführung der Anwendung auf einer virtuellen Maschine;
Detektieren einer Beendigung einer Ausführungsschleife bei der Ausführung der Anwendung auf der virtuellen Maschine, wobei die einen oder mehreren früheren Speicherzuweisungen während der Ausführungsschleife gemacht werden;
Erzeugen der neuen Speicherzuweisung auf der virtuellen Maschine;
wobei Vergleichen der neuen Speicherzuweisung und der einen oder mehreren früheren Speicherzuweisungen nach Detektion der Beendigung der Ausführungsschleife durchgeführt wird.

4. Verfahren nach Anspruch 1, wobei:
Vergleichen der neuen Speicherzuweisung mit der einen oder den mehreren Speicherzuweisungen ferner Vergleichen einer Prüfsumme der neuen Speicherzuweisung mit einer Prüfsumme der einen oder mehreren der einen oder mehreren früheren Speicherzuweisungen umfasst;
Bestimmen, ob die Daten Malware enthalten, Bestimmen, ob die neue Speicherzuweisungsprüfsumme der Prüfsumme von irgendeiner der einen oder mehreren früheren Speicherzuweisungen gleicht.

5. Verfahren nach Anspruch 1, wobei:
Vergleichen der neuen Speicherzuweisung mit der einen oder mehreren früheren Speicherzuweisungen ferner Vergleichen der Erzeugungszeit der neuen Speicherzuweisung mit der Erzeugungszeit der einen oder mehreren früheren Speicherzuweisungen umfasst;
Bestimmen, ob die Daten Malware erhalten, fernen Bestimmen, ob die neue Speicherzuweisung innerhalb einer Schwellenwerterzeugungszeit von irgendeiner der einen oder mehreren früheren Speicherzuweisungen erzeugt wurde.

6. Verfahren nach Anspruch 1, wobei:
Vergleichen der neuen Speicherzuweisung mit der einen oder mehreren früheren Speicherzuweisungen ferner Vergleichen eines ersten Entropiewerts der neuen Speicherzuweisung mit einem zweiten Entropiewert der einen oder mehreren früheren Speicherzuweisungen umfasst;
Bestimmen, ob die Daten Malware enthalten, ferner Bestimmen, ob der erste Entropiewert innerhalb eines Schwellenwerts des zweiten Entropiewerts liegt, umfasst.

7. Verfahren nach Anspruch 1, wobei:
Vergleichen der neuen Speicherzuweisung mit der einen oder mehreren früheren Speicherzuweisungen ferner umfasst zwei oder mehr von:
Vergleichen einer Prüfsumme der neuen Speicherzuweisung mit einer Prüfsumme von einer oder mehreren der einen oder mehreren früheren Speicherzuweisungen;
Vergleichen der Erzeugungszeit der neuen Speicherzuweisung mit der Erzeugungszeit der einen oder mehreren früheren Speicherzuweisungen;
Vergleichen eines ersten Entropiewerts der neuen Speicherzuweisung mit einem zweiten Entropiewert der einen oder mehreren früheren Speicherzuweisungen;
Bestimmen, ob die Daten Malware enthalten, ferner umfasst Bestimmen von zwei oder mehr von:
ob die neue Speicherzuweisungsprüfsumme der Prüfsumme von irgendeiner der einen oder mehreren früheren Speicherzuweisungen gleicht;
ob die neue Speicherzuweisung innerhalb einer zweiten Schwellenwerterzeugungszeit von irgendeiner der einen oder mehreren früheren Speicherzuweisungen erzeugt wurde;
ob der erste Entropiewert innerhalb eines dritten Schwellenwerts des zweiten Entropiewerts liegt.

8. Verfahren nach Anspruch 1, ferner umfassend:
basierend auf dem Vergleich Bestimmen, dass der Malware-Status der Daten unbekannt ist; und
Durchführen einer Anti-Malware-Analyse basierend auf den Inhalten der Daten, um zu bestimmen, ob die Daten Malware enthalten.

9. Herstellungsartikel, umfassend:
ein nicht flüchtiges Computer-lesbares Medium; und
von einem Computer ausführbare Befehle auf dem nicht flüchtigen Computerlesbaren Medium, wobei die Befehle von einem Prozessor lesbar sind und die Befehle bei Einlesen und Ausführung bewirken, dass der Prozessor die Schritte von irgendeinem der Verfahren der Ansprüche 1 bis 8 ausführt.

10. System zur Detektion von Malware, umfassend:
einen mit einem Speicher gekoppelten Prozessor; und
eine von dem Prozessor ausgeführte Anti-Malware-Detektionseinrichtung, resident im Speicher, wobei die Anti-Malware-Detektionseinrichtung konfiguriert ist, um die Operationen von einem der Verfahren der Ansprüche 1 bis 8 auszuführen.

## Revendications

1. Procédé de détection de logiciels malveillants, ce procédé étant exécuté par un détecteur anti-logiciel malveillant (102) et ce procédé comprenant :
l'identification d'un ensemble de données (106) dont le statut de logiciel malveillant n'est pas connu comme étant sûr ;
le lancement (410) d'une application (224) sur un dispositif électronique utilisant les données ;
la détermination (415) qu'une ou plusieurs allocations de mémoire antérieures ont été créées par l'application, les allocations de mémoire antérieures ayant été créées après le lancement sur le dispositif électronique et avant la création d'une nouvelle allocation de mémoire ;
la détermination que la nouvelle allocation de mémoire a été créée par l'application ;
la comparaison de la nouvelle allocation de mémoire à l'une ou plusieurs allocations de mémoire antérieures,
la comparaison de la nouvelle allocation de mémoire à l'une ou plusieurs allocations de mémoire antérieures comprenant
la comparaison (530, 535) de la taille de la nouvelle allocation de mémoire à la taille de l'une ou plusieurs allocations de mémoire ; et
sur la base de la comparaison, la détermination si les données comprennent un logiciel malveillant, la détermination si les données comprennent un logiciel malveillant comprenant la détermination si la taille de la nouvelle allocation de mémoire est dans une quantité seuil de la taille de certaines de l'une ou plusieurs allocations de mémoire antérieures, ledit seuil étant déterminé à partir d'une base de données comprenant des critères pour la réalisation de comparaisons entre des allocations de mémoire, lesdits critères comprenant des seuils de différence entre des allocations de mémoire, les données (106) et le résultat de la détermination si les données (106) comprennent un logiciel malveillant étant fournis à un classificateur anti-logiciel malveillant en cloud (222) ou à un serveur anti-logiciel malveillant pour la mise à jour de la base de données (218).

2. Procédé selon la revendication 1, dans lequel :
la comparaison de la nouvelle allocation de mémoire à l'une ou plusieurs allocations de mémoire antérieures comprend en outre l'application d'un critère pour la détermination si la nouvelle allocation de mémoire correspond à une ou plusieurs des une ou plusieurs allocations de mémoire antérieures ; et
la détermination que les données comprennent un logiciel malveillant est basée sur le fait que la nouvelle allocation de mémoire correspond à une ou plusieurs des une ou plusieurs allocations de mémoire.

3. Procédé selon la revendication 1, comprenant en outre :
l'émulation de l'exécution de l'application sur une machine virtuelle ;
la détection d'une fin d'une boucle d'exécution dans l'exécution de l'application sur la machine virtuelle, les une ou plusieurs allocations de mémoire antérieures étant effectuées pendant la boucle d'exécution ; et
la création de la nouvelle allocation de mémoire sur la machine virtuelle ;
la comparaison de la nouvelle allocation de mémoire et des une ou plusieurs allocations de mémoire antérieures étant effectuée après la détection de la fin de la boucle d'exécution.

4. Procédé selon la revendication 1, dans lequel :
la comparaison de la nouvelle allocation de mémoire à l'une ou plusieurs allocations de mémoire antérieures comprend en outre la comparaison d'une somme de contrôle de la nouvelle allocation de mémoire à une somme de contrôle de l'une ou plusieurs allocations de mémoire antérieures ; et
la détermination si les données comprennent un logiciel malveillant comprend en outre la détermination si la somme de contrôle de la nouvelle allocation de mémoire est égale à la somme de contrôle d'une des une ou plusieurs allocations de mémoire antérieures.

5. Procédé selon la revendication 1, dans lequel :
la comparaison de la nouvelle allocation de mémoire à l'une ou plusieurs allocations de mémoire antérieures comprend en outre la comparaison du temps de création de la nouvelle allocation de mémoire au temps de création des une ou plusieurs allocations de mémoire antérieures ; et
la détermination si les données comprennent un logiciel malveillant comprend en outre la détermination si la nouvelle allocation de mémoire a été créée dans un seuil de temps de création d'une des une ou plusieurs allocations de mémoire antérieures.

6. Procédé selon la revendication 1, dans lequel :
la comparaison de la nouvelle allocation de mémoire à l'une ou plusieurs allocations de mémoire antérieures comprend en outre la comparaison d'une première valeur d'entropie de la nouvelle allocation de mémoire à une deuxième valeur d'entropie des une ou plusieurs allocations de mémoire antérieures ; et
la détermination si les données comprennent un logiciel malveillant comprend en outre la détermination si la première valeur d'entropie est dans une quantité seuil de la deuxième valeur d'entropie.

7. Procédé selon la revendication 1, dans lequel :
la comparaison de la nouvelle allocation de mémoire à l'une ou plusieurs allocations de mémoire antérieures comprend en outre deux ou plus parmi :
la comparaison d'une somme de contrôle de la nouvelle allocation de mémoire à une somme de contrôle des une ou plusieurs allocations de mémoire antérieures ;
la comparaison du temps de création de la nouvelle allocation de mémoire au temps de création des une ou plusieurs allocations de mémoire antérieures ; et
la comparaison d'une première valeur d'entropie de la nouvelle allocation de mémoire à une deuxième valeur d'entropie des une ou plusieurs allocations de mémoire antérieures ; et
la détermination si les données comprennent un logiciel malveillant comprend en outre la détermination de deux ou plus parmi :
si la somme de contrôle de la nouvelle allocation de mémoire est égale à une somme de contrôle des une ou plusieurs allocations de mémoire antérieures ;
si la nouvelle allocation de mémoire a été créée dans un deuxième seuil de temps de création d'une des une ou plusieurs allocations de mémoire antérieures ;
si la première valeur d'entropie est dans une troisième quantité seuil de la deuxième valeur d'entropie.

8. Procédé selon la revendication 1, comprenant en outre :
sur la base de la comparaison, la détermination que le statut de logiciel malveillant des données est inconnu ; et
la réalisation d'une analyse anti-logiciel malveillant sur la base des contenus des données pour déterminer si les données comprennent un logiciel malveillant.

9. Article de fabrication comprenant :
un support non transitoire lisible par un ordinateur ; et
des instructions exécutables par un ordinateur, stockées sur le support non transitoire lisible par un ordinateur, les instructions pouvant être lues par un processeur, les instructions, lorsqu'elles sont lues et exécutées, faisant en sorte que le processeur exécute les étapes d'un des procédés selon les revendications 1 à 8.

10. Système de détection de logiciels malveillants, comprenant :
un processeur couplé à une mémoire ; et
un détecteur anti-logiciel malveillant exécuté par le processeur, résidant dans la mémoire, le détecteur anti-logiciel malveillant étant conçu pour effectuer les opérations des procédés 1 à 8.
